# EUROPÄISCHE PATENTSCHRIFT

(11) **EP 4 373 661 B1**
(45) Veröffentlichungstag und Bekanntmachung des Hinweises auf die Patenterteilung: **26.08.2026**
(21) Anmeldenummer: 22751086.4
(22) Anmeldetag: 18.07.2022
(51) Int. Cl.: B30B 9/02, B30B 9/12, B30B 9/18, B30B 15/32

(54) **AUSSTOSSVORRICHTUNG EINES PRESSSCHNECKENSEPARATORS**
EJECTION DEVICE OF A SCREW-PRESS SEPARATOR
DISPOSITIF D'ÉJECTION D'UN SÉPARATEUR À VIS DE PRESSION

(30) Priorität: 22.07.2021 DE 102021119019
(43) Veröffentlichungstag der Anmeldung: 29.05.2024
(73) Patentinhaber: Röhren- und Pumpenwerk Bauer Ges.m.b.H., 8570 Voitsberg (AT)
(72) Erfinder: ROISS, Otto, 8010 Graz (AT)
(74) Vertreter: Hoefer & Partner Patentanwälte mbB
(86) Internationale Anmeldenummer: PCT/EP2022/070035
(87) Internationale Veröffentlichungsnummer: WO 2023/001748

(56) Entgegenhaltungen:
- DE-A1- 1 567 309
- DE-A1- 102013 021 037
- DE-A1- 102018 130 862
- DE-U1- 29 901 683
- IT-A1- CR20 010 001
- IT-U1- CR 990 013
- JP-A- 2000 288 596
- JP-B2- 3 675 219
- US-A- 3 411 435
- US-A- 4 665 816

## Beschreibung

Die Erfindung betrifft einen Pressschneckenseparator und eine Ausstoßvorrichtung eines Pressschneckenseparators. Des Weiteren zeigt die Erfindung ein Verfahren zur Abscheidung fester Bestandteile aus einer Trübe unter Verwendung des Pressschneckenseparators. Pressschneckenseparatoren werden zum Auspressen einer Trübe verwendet. Die Trübe kann beispielsweise Gülle oder Abwasser sein. Des Weiteren kann es sich bei der Trübe um eine auszupressende Masse aus Obst oder Gemüse handeln. Die Abwässer können beispielsweise aus landwirtschaftlichen, kommunalen oder industriellen Anlagen oder Schlachthöfen stammen.

Pressschneckenseparatoren weisen ein Gehäuse auf, in dem ein zylindrisches oder konisches Sieb angeordnet ist. Innerhalb des Siebes rotiert dabei eine Pressschnecke. Mittels der Pressschnecke wird die Trübe durch den Pressschneckenseparator gefördert und gepresst. Durch das Sieb hindurch treten die flüssigen Anteile der Trübe radial nach außen und fließen ab. Innerhalb des Siebes bzw. am Ende des Siebes bildet sich dabei ein Feststoffpfropfen aus, der durch die rotierende Pressschnecke an ein Ende gefördert wird. An diesem Ende des Gehäuses befindet sich üblicherweise eine Ausstoßvorrichtung (auch: Ausstoßregler). Die Ausstoßvorrichtung erzeugt eine auf den Feststoffpfropfen wirkende Gegenkraft, die entgegen der Förderrichtung der Pressschnecke wirkt.

US 3 411 435 A offenbart eine Ausstoßvorrichtung gemäß dem Oberbegriff von Anspruch 1. Es offenbart eine kontinuierlich arbeitende mechanische Schneckenpresse, die Material aus einem Diffusor mit einem hohen Feuchtigkeitsgehalt in der Größenanordnung von 85 bis 90% aufnimmt und dieses Material kontinuierlich durch die Presse fördert. Das Material wird komprimiert und kontinuierlich bearbeitet, um sein Volumen durch den Durchgang durch mehrere Arbeitsschritte mit abnehmendem Durchmesser zu verringern, wodurch dem Material etwa die Hälfte der Feuchtigkeit entzogen wird.

Weiteren Stand der Technik zeigen US 4 665 816 A und JP 2000 288596 A.

Es ist Aufgabe vorliegender Erfindung, eine Ausstoßvorrichtung eines Pressschneckenseparators anzugeben, die bei einfachem und wartungsarmem Betrieb ein effizientes Auspressen der Trübe ermöglicht.

Die Lösung dieser Aufgabe erfolgt durch die Merkmale der unabhängigen Ansprüche, die abhängigen Ansprüche haben bevorzugte Ausgestaltungen der Erfindung zum Gegenstand.

Die Ausstoßvorrichtung umfasst ein Rohr, das an dem Feststoffauslass des Pressschneckenseparators anzuordnen ist. Insbesondere ist das Rohr zur Verbindung mit einem Gehäuse des Pressschneckenseparators ausgestaltet, wozu an dem Rohr beispielsweise ein Flansch vorgesehen ist. Allerdings kann das Rohr auch integraler Bestandteil des Gehäuses des Pressschneckenseparators sein.

Die Ausstoßvorrichtung umfasst zusätzlich zu dem Rohr einen Verschlusskonus, der in das Rohr ein- und ausfahrbar ist. Der Verschlusskonus ist so angeordnet, dass das Spitzende des Konus in das Rohr ragt; das Spitzende des Verschlusskonus kann beispielsweise spitz oder kegelstumpfförmig ausgebildet sein. Zwischen dem Außenumfang des Verschlusskonus und dem Innenumfang des Rohrs entsteht ein ringförmiger Auslassspalt, dessen Größe durch Ein- und Ausfahren des Verschlusskonus variiert werden kann. Über diesen Auslassspalt tritt der im Pressschneckenseparator separierte Feststoff nach außen.

Zur Bewegung des Verschlusskonus und insbesondere zum Aufbringen einer Gegenkraft auf den austretenden Feststoffpfropfen umfasst die Ausstoßvorrichtung einen Aktuator. Dieser Aktuator ist mit dem Verschlusskonus wirkverbunden und ist insbesondere dazu angeordnet, den Verschlusskonus koaxial zur Förderrichtung des Pressschneckenseparators zu bewegen. Zur Ansteuerung des Verschlusskonus ist eine Aktuatorsteuereinheit vorgesehen. Die Aktuatorsteuereinheit ist insbesondere dazu ausgebildet, die mit dem Verschlusskonus aufgebrachte Gegenkraft zu variieren.

Die Aktuatorsteuereinheit ist dazu ausgebildet, den Aktuator, basierend auf einem variablen Betriebsgröße-Signal eines Elektromotors des Pressschneckenseparators anzusteuern. Bei dem Elektromotor des Pressschneckenseparators handelt es sich um den Antrieb der Pressschnecke des Pressschneckenseparators. Das Betriebsgröße-Signal, welches zur Ansteuerung der Aktuatorsteuereinheit verwendet wird, verändert sich beim laufenden Elektromotor insbesondere mit der abgegebenen Leistung des Elektromotors und/oder Drehzahl des Elektromotors und wird deshalb als "variables" Betriebsgröße-Signal bezeichnet.

Die Ansteuerung des Aktuators und somit die Veränderung der Gegenkraft auf den Feststoffpfropfen basiert auf dem Betriebsgröße-Signal des Elektromotors und ermöglicht eine sehr präzise Steuerung des TS-Gehalts (Trockensubstanzgehalts) des austretenden Feststoffes. Es ist insbesondere vorgesehen, dass die Aktuatorsteuereinheit dazu ausgebildet ist, die Gegenkraft zu reduzieren, wenn sich aus dem Betriebsgröße-Signal eine Steigerung der abgegebenen Leistung des Elektromotors ergibt.

An der Aktuatorsteuereinheit ist ein Dateneingang für eine Datenübertragung des Betriebsgröße-Signals oder eines auf dem Betriebsgröße-Signal basierenden Signals vorgesehen. Diese Datenübertragung erfolgt vorzugsweise kabelgebunden, so dass der Dateneingang beispielsweise als Stecker oder sonstiger Eingang für eine kabelgebundene Datenübertragung ausgebildet ist.

Bei dem Aktuator handelt es sich um einen Druckmittelzylinder. Der Druckmittelzylinder ist ein Pneumatikzylinder. Der Druckmittelzylinder ist insbesondere koaxial zur Bewegungsrichtung des Verschlusskonus angeordnet, so dass ohne Übersetzung oder sonstiger Mechanik unmittelbar die Bewegung des Druckmittelzylinders auf den Verschlusskonus übertragbar ist.

Die Aktuatorsteuereinheit umfasst ein Druckregelventil, insbesondere Proportional-Druckregelventil. Dem Druckregelventil ist vorzugsweise ein Druckminderer vorgeschalten. Die Veränderung der Gegenkraft, also insbesondere die Veränderung des Drucks im Druckmittelzylinder, erfolgt vorzugsweise mittels des Druckregelventils. Insbesondere ist das Druckregelventil zu Ansteuerung basierend auf dem Betriebsgröße-Signal ausgebildet.

Für eine präzise Einstellung des Gegendrucks ist vorzugsweise vorgesehen, dass das Druckregelventil eine maximale Druckhysterese von höchstens 0,5 bar, vorzugsweise höchstens 0,25 bar, aufweist.

Ferner ist vorzugsweise vorgesehen, dass das Druckregelventil einen Linearitätsfehler FS (Full Scale) von höchstens 5%, vorzugsweise höchstens 3%, besonders vorzugsweise höchstens 2%, aufweist.

Dem Druckregelventil ist vorzugsweise eine Wartungseinheit zur Entfeuchtung der Druckluft vorgeschaltet. Zusätzlich oder alternativ ist dem Druckregelventil vorzugsweise ein Feinst-Filter vorgeschaltet. Mittels des Feinst-Filters wird eine Beschädigung des Druckregelventils vermieden. Die Wartungseinheit und/oder der Feinst-Filter und/oder der Druckminderer und/oder das Druckregelventil können in einem Bauteil zusammengefasst sein.

Des Weiteren ist bevorzugt vorgesehen, dass die Aktuatorsteuereinheit einen Anschluss zum Anschließen an eine übergeordnete Druckversorgungsleitung aufweist. Dieser Anschluss führt insbesondere druckleitend zum Druckminderer der Aktuatorsteuereinheit. Insbesondere ist vorgesehen, dass die Ausstoßvorrichtung und der Pressschneckenseparator keine eigene Pumpe zum Erzeugen des Drucks für den Druckmittelzylinder aufweisen, sondern über den Anschluss eine Verbindung zu einer übergeordneten Druckversorgungsleitung stattfindet. Die Druckversorgungsleitung wird als "übergeordnet" bezeichnet, da sie neben der Ausstoßvorrichtung noch beliebige andere Vorrichtungen innerhalb eines Gebäudes mit Druck versorgen kann.

Das Rohr der Ausstoßvorrichtung ist vorzugsweise am Innenumfang konisch. Vorzugsweise ist das Rohr über zumindest 80% seiner Länge am Innenumfang konisch. Insbesondere ist vorgesehen, dass das Rohr über zumindest 90%, besonders vorzugsweise 100%, seiner Länge am Innenumfang konisch ist. Durch diese weitgehend konische Ausgestaltung des Rohrs wird eine Verstopfung innerhalb des Rohrs vermieden.

Des Weiteren weist die Ausstoßvorrichtung vorzugsweise eine Aufnahme auf. Diese Aufnahme erstreckt sich vom Rohr, beispielsweise vom Flansch des Rohres, und trägt den Aktuator. Eine aus dem Aktuator ragende Stange, insbesondere Kolbenstange, kann direkt oder über eine koaxiale Verlängerung mit dem Verschlusskonus verbunden sein.

Die Erfindung umfasst ferner einen Pressschneckenseparator. Der Pressschneckenseparator umfasst die bereits beschriebene Ausstoßvorrichtung, so dass die im Rahmen der Ausstoßvorrichtung beschriebenen vorteilhaften Ausgestaltungen und die zugehörigen Unteransprüche auch in vorteilhafter Weise auf den Pressschneckenseparator anzuwenden sind.

Der Pressschneckenseparator weist ein Gehäuse auf. An diesem Gehäuse kann das Rohr der Ausstoßvorrichtung angeflanscht sein. Allerdings ist es auch möglich, dass das Rohr der Ausstoßvorrichtung integraler Bestandteil des Gehäuses ist.

An dem Gehäuse ist ein Feststoffauslass definiert. Dieser Feststoffauslass stellt den Übergang zum Rohr der Ausstoßvorrichtung dar. An diesem Feststoffauslass bzw. innerhalb des Rohres der Ausstoßvorrichtung bildet sich der Feststoffpfropfen.

In dem Gehäuse des Pressschneckenseparators befinde sich ein Sieb. In dem Sieb wiederum ist eine Pressschnecke drehbar angeordnet. Die Pressschnecke weist insbesondere eine Seele und zumindest eine darauf angeordnete Wendel auf. Die Pressschnecke, insbesondere die Seele der Pressschnecke, erstreckt sich entlang einer Förderrichtung des Pressschneckenseparators. Entlang dieser Förderrichtung wird die Trübe ausgepresst und der Feststoff gefördert. Die beschriebene Gegenkraft der Ausstoßvorrichtung wirkt entgegen der Förderrichtung.

Zum rotierenden Antreiben der Pressschnecke ist ein Elektromotor des Pressschneckenseparators vorgesehen. Das Betriebsgröße-Signal zur Ansteuerung des Aktuators der Ausstoßvorrichtung basiert auf einer Betriebsgröße des laufenden Elektromotors.

Der Pressschneckenseparator umfasst vorzugsweise eine Motorelektronik. Die Motorelektronik kann grundsätzlich zum Ansteuern des Elektromotors und/oder zum Messen am Elektromotor ausgebildet sein. Die Motorelektronik ist ferner dazu ausgebildet, das Betriebsgröße-Signal des Elektromotors an die Aktuatorsteuereinheit zu senden. Vorzugsweise umfasst die Motorelektronik einen den Elektromotor ansteuernden Frequenzumrichter, wobei der Frequenzumrichter das Betriebsgröße-Signal erzeugt.

Insbesondere ist die Motorelektronik dazu ausgebildet, als Betriebsgröße-Signal ein leistungsabhängiges Stromsignal oder leistungsabhängiges Spannungssignal des laufenden Elektromotors abzugeben.

Die Aktuatorsteuereinheit ist vorzugsweise dazu ausgebildet, die Gegenkraft, insbesondere den Druck des Druckmittelzylinders, bei steigender Leistung des Elektromotors zu verringern. Steigt beispielsweise die Stromaufnahme des Elektromotors, so wird die Gegenkraft am Verschlusskonus verringert, wodurch sich der Auslassspalt vergrößert. Dadurch fällt die Stromaufnahme am Elektromotor ab und der Gegendruck wird wieder erhöht. Durch diese Steuerung ist es beispielsweise möglich, den Elektromotor in einem gewünschten Leistungsbereich, z.B. bei 80% des Nennstroms, zu betreiben.

Im Rahmen der Entwicklung hat sich herausgestellt, dass insbesondere für Trüben mit wenig Struktur - beispielsweise wenig oder kurzen Fasern - eine präzise Steuerung des Gegendrucks an der Ausstoßvorrichtung nötig ist, um einen gewünschten TS-Gehalt zu erreichen. Bei dem gewünschten TS-Gehalt handelt es sich insbesondere um einen möglichst hohen TS-Gehalt des Feststoffes. Deshalb ist insbesondere vorgesehen, dass, wie bereits erwähnt, die Aktuatorsteuereinheit ein Druckregelventil aufweist. Dieses hat vorzugsweise einen Einstellbereich von bis zu maximal 10 Bar, vorzugsweise bis zu maximal 5 Bar. Insbesondere ausschlaggebend für die präzise Steuerung des TS-Gehaltes ist die mit dem Verschlusskonus aufgebrachte Gegenkraft. Je höher allerdings diese Gegenkraft ist, desto aufwendiger wird die Gestaltung des Aktuators und der Aktuatorsteuereinheit, wenn eine präzise Einstellung der Gegenkraft nötig ist. Deshalb ist vorzugsweise vorgesehen, dass die Aktuatorsteuereinheit dazu ausgebildet ist, die Gegenkraft lediglich bis zu einer Obergrenze zu variieren. Diese Obergrenze liegt vorzugsweise bei 10 kN (Kilonewton), insbesondere 8 kN, besonders vorzugsweise 5 kN.

Vorzugsweise umfasst der Pressschneckenseparator zumindest eine Waschdüse, die zum Spritzen von Flüssigkeit, insbesondere Wasser, auf das Sieb angeordnet ist. Die Waschdüse befindet sich insbesondere außerhalb des Siebes und spritzt von außen auf das Sieb. Bevorzugt ist eine Waschdüsensteuereinheit vorgesehen, die in die Motorelektronik integriert sein kann. Die Ansteuerung der Waschdüse, also das Anschalten der Waschdüse, erfolgt vorzugsweise basierend einem variablen Betriebsgröße-Signal des Elektromotors, insbesondere auf dem vorab beschriebenen variablen Betriebsgröße-Signal.

Die Erfindung umfasst ferner ein Verfahren zur Abscheidung fester Bestandteile aus einer feste und flüssige Bestandteile enthaltenden Trübe. Dabei erfolgt ein Betreiben eines Pressschneckenseparators. Dabei handelt es sich um den bereits beschriebenen Pressschneckenseparator. Der Pressschneckenseparator zur Durchführung des Verfahrens umfasst zumindest eine Pressschnecke, die entlang einer Förderrichtung einen Feststoffpfropfen aus der Trübe erzeugt und fördert, sowie einen Elektromotor zum rotierenden Antrieb der Pressschnecke. Des Weiteren ist an dem Pressschneckenseparator eine Ausstoßvorrichtung vorgesehen, die mittels eines Aktuators entgegen der Förderrichtung eine Gegenkraft auf den Feststoffpfropfen aufbringt. Bei der Ausstoßvorrichtung handelt es sich vorzugsweise um die bereits beschriebene Ausstoßvorrichtung.

Im Rahmen des Verfahrens erfolgt ein Abgreifen des variablen Betriebsgröße-Signals des laufenden Elektromotors. Wie bereits beschrieben, ist das variable Betriebsgröße-Signal vorzugsweise von der vom Elektromotor abgegebenen Leistung direkt oder indirekt abhängig. Insbesondere handelt es sich um die aktuelle Stromaufnahme des Elektromotors. Des Weiteren erfolgt im Rahmen des Verfahrens ein Ansteuern des Aktuators basierend auf diesem Betriebsgröße-Signal.

Die im Rahmen der erfindungsgemäßen Ausstoßvorrichtung und im Rahmen des erfindungsgemäßen Pressschneckenseparators beschriebenen vorteilhaften Ausgestaltungen und die zugehörigen Unteransprüche finden entsprechend vorteilhafte Anwendung auf das Verfahren.

Weitere Einzelheiten, Vorteile und Merkmale der vorliegenden Erfindung ergeben sich aus nachfolgender Beschreibung eines Ausführungsbeispiels anhand der Zeichnung. Dabei zeigen:
- Fig. 1: eine schematische Ansicht eines erfindungsgemäßen Pressschneckenseparators mit erfindungsgemäßer Ausstoßvorrichtung zur Durchführung des erfindungsgemäßen Verfahrens gemäß einem Ausführungsbeispiel, und
- Fig. 2: die erfindungsgemäße Ausstoßvorrichtung gemäß dem Ausführungsbeispiel.

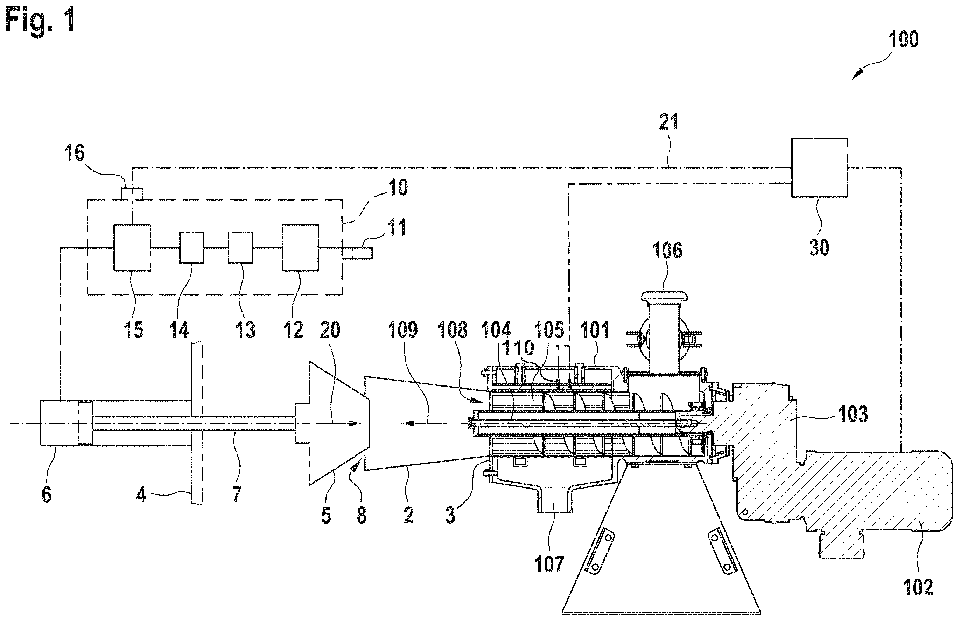

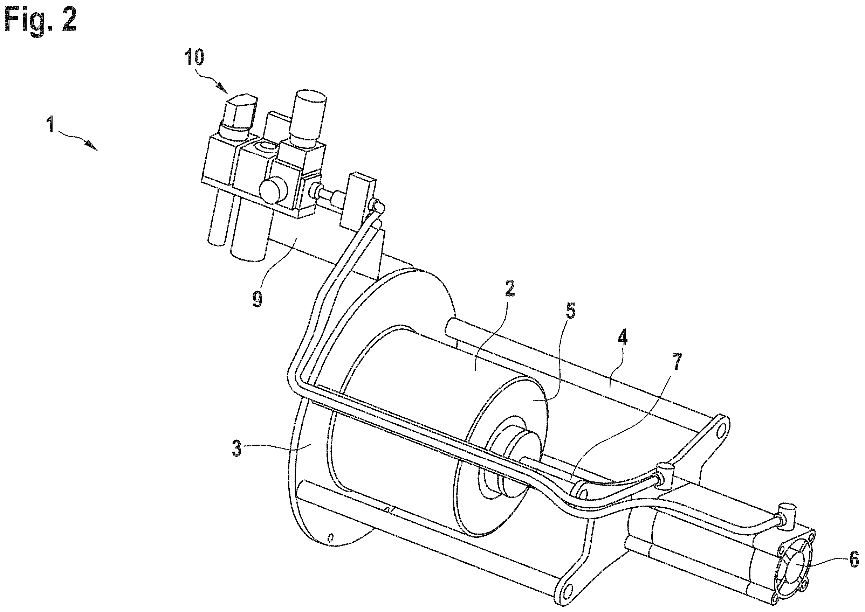

Im Folgenden wird anhand der Fig. 1 und 2 ein Pressschneckenseparator 100 mit Ausstoßvorrichtung 1 zur Durchführung eines Verfahrens zur Abscheidung fester Bestandteil aus einer feste und flüssige Bestandteile enthaltenden Trübe beschrieben. Dabei wird, soweit nicht im Detail anders erwähnt, stets auf beide Figuren Bezug genommen.

Der Pressschneckenseparator 100 umfasst ein Gehäuse 101, an dem ein Getriebe 103 angeflanscht ist. Das Getriebe 103 ist mit einem Elektromotor 102 antriebsverbunden.

In dem Gehäuse 101 befindet sich ein Sieb 105. In dem Sieb 105 ist eine Pressschnecke 104 angeordnet. Die Pressschnecke 104 liegt horizontal und erstreckt sich entlang einer Förderrichtung 109 des Pressschneckenseparators 100.

Die Pressschnecke 104 ist über das Getriebe 103 mit dem Elektromotor 102 antriebsverbunden.

An der Oberseite des Gehäuses 101 ist ein Zulauf 106 zum Einfüllen der Trübe ausgebildet. An der Unterseite des Gehäuses 101 befindet sich ein Ablauf 107 zum Abführen der flüssigen Bestandteile der Trübe.

Das Getriebe 103 ist an einer Stirnseite des Gehäuses 101 angeordnet. An der gegenüberliegenden Stirnseite ist ein Feststoffauslass 108 definiert. An diesem Feststoffauslass 108 ist die Ausstoßvorrichtung 1 angeflanscht.

Die Ausstoßvorrichtung 1 umfasst ein Rohr 2 mit konischem Innenumfang. Das Rohr 2 weist einen Flansch 3 auf, der am Feststoffauslass 108 des Gehäuses 101 befestigt ist.

Des Weiteren umfasst die Ausstoßvorrichtung 1 eine am Flansch 3 angeordnete Aufnahme 4. An dieser Aufnahme 4 wiederum ist ein Aktuator 6 befestigt, der als Druckmittelzylinder, insbesondere Pneumatikzylinder, ausgebildet ist.

Des Weiteren umfasst die Ausstoßvorrichtung 1 einen Verschlusskonus 5, der über eine Stange 7 mittels des Aktuators 6 koaxial zur Förderrichtung 109 in das Rohr 2 ein- und ausfahrbar ist. Bei der Stange 7 kann es sich um die Kolbenstange des Aktuators 6 oder eine entsprechende Verlängerung dieser Kolbenstange handeln.

Zwischen dem Verschlusskonus 5 und dem Rohr 2 ist ein ringförmiger Auslassspalt 8 für den Feststoff ausgebildet.

Mittels des Verschlusskonus 5 und dem Aktuator 6 wird eine Gegenkraft 20 auf den Feststoff aufgebracht, die entgegen der Förderrichtung 109 wirkt.

Die Ausstoßvorrichtung 1 umfasst ferner eine Aktuatorsteuereinheit 10. Die Aktuatorsteuereinheit 10 umfasst einen Druckminderer 12 und ein Druckregelventil 15. Des Weiteren umfasst die Aktuatorsteuereinheit 1 eine Wartungseinheit 13 zum Entfeuchten der Druckluft und einen Feinst-Filter 14. Der Aufbau der Aktuatorsteuereinheit 10 ist schematisch gezeigt, wobei die funktionalen Komponenten beliebig in Bauteile zusammengefasst werden können.

Ferner umfasst die Aktuatorsteuereinheit 10 einen Anschluss 11 zum Anschließen einer Druckluftleitung an den Druckminderer 12 und einen Dateneingang 16. Der Dateneingang 16 führt insbesondere zum Druckregelventil 15.

Figur 1 zeigt in der schematischen Ansicht eine Motorelektronik 30, die bei der konstruktiven Umsetzung an beliebiger Stelle angeordnet sein kann. Die Motorelektronik 30, insbesondere mit einem Frequenzumrichter, ist dazu ausgebildet, ein variables Betriebsgröße-Signal 21 des laufenden Elektromotors 102 an die Aktuatorsteuereinheit 10 zu senden. Zusätzlich kann die Motorelektronik 30 auch zum Ansteuern des Elektromotors 102 verwendet werden.

Bei dem Betriebsgröße-Signal 21 handelt es sich insbesondere um ein Stromsignal oder Spannungssignal. Basierend auf dem Betriebsgröße-Signal 21 erfolgt die Ansteuerung der Aktuatorsteuereinheit 10, insbesondere des Druckregelventils 15, wobei das Druckregelventil 15 hierzu vorzugsweise als Proportional-Druckregelventil ausgebildet ist.

Der Pressschneckenseparator 100 umfasst bevorzugt zumindest eine Waschdüse 110, die zum Spritzen von Wasser auf das Sieb 105 angeordnet ist. Eine Waschdüsensteuereinheit ist bevorzugt in die Motorelektronik 30 integriert. Die Ansteuerung der Waschdüse 110 erfolgt insbesondere basierend auf dem variablen Betriebsgröße-Signal 21.

Fig. 2 zeigt im Detail die konstruktive Ausgestaltung der Ausstoßvorrichtung 1. Gezeigt ist eine Halterung 9, die sich vom Rohr 2, insbesondere vom Flansch 3, in Richtung des Pressschneckenseparators 100 erstreckt und insbesondere so ausgebildet ist, dass sie sich über das Gehäuse 101 des Pressschneckenseparators erstreckt. Die Halterung 9 dient zur Aufnahme zumindest eines Teils der Aktuatorsteuereinheit 10. Insbesondere sind an der Halterung 9 der Druckminderer 12 und das Druckregelventil 15 befestigt.

### Bezugszeichenliste

- 1: Ausstoßvorrichtung
- 2: Rohr
- 3: Flansch
- 4: Aufnahme
- 5: Verschlusskonus
- 6: Aktuator
- 7: Stange
- 8: Auslassspalt
- 9: Halterung
- 10: Aktuatorsteuereinheit
- 11: Anschluss
- 12: Druckminderer
- 13: Wartungseinheit
- 14: Feinst-Filter
- 15: Druckregelventil
- 16: Dateneingang
- 20: Gegenkraft
- 21: variables Betriebsgröße-Signal
- 30: Motorelektronik
- 100: Pressschneckenseparator
- 101: Gehäuse
- 102: Elektromotor
- 103: Getriebe
- 104: Pressschnecke
- 105: Sieb
- 106: Zulauf
- 107: Ablauf
- 108: Feststoffauslass
- 109: Förderrichtung
- 110: Waschdüse

## Patentansprüche

1. Ausstoßvorrichtung (1) eines Pressschneckenseparators (100) zur Abscheidung fester Bestandteile aus einer feste und flüssige Bestandteile enthaltenden Trübe, umfassend
• ein Rohr (2) zum Anordnen an den Feststoffauslass (108) des Pressschneckenseparators (100),
• einen in das Rohr (2) ein- und ausfahrbaren Verschlusskonus (5) zur Bildung eines Auslassspalts (8) zwischen Rohr (2) und Verschlusskonus (5),
• einen Aktuator (6) zum Beaufschlagen des Verschlusskonus (5) mit einer Gegenkraft (20),
• und eine Aktuatorsteuereinheit (10), die zur Ansteuerung des Aktuators (6) basierend auf einem variablen Betriebsgröße-Signal (21) eines Elektromotors (102) des Pressschneckenseparators (100) ausgebildet ist
• wobei die Aktuatorsteuereinheit (10) einen Dateneingang (16) für eine Datenübertragung des Betriebsgröße-Signals (21) umfasst, **dadurch gekennzeichnet, dass**
• der Aktuator (6) als Druckmittelzylinder, nämlich Pneumatikzylinder ausgebildet ist, und
• die Aktuatorsteuereinheit (10) ein mit dem Betriebsgröße-Signal (21) ansteuerbares Druckregelventil (15), insbesondere ein Proportional-Druckregelventil, umfasst.

2. Ausstoßvorrichtung nach Anspruch 1, wobei der Druckmittelzylinder koaxial zur Bewegungsrichtung des Verschlusskonus angeordnet ist.

3. Ausstoßvorrichtung nach einem der vorhergehenden, wobei das Druckregelventil (15) eine maximale Druckhysterese von höchstens 0,5 bar, vorzugsweise höchstens 0,25 bar, aufweist; und/oder wobei das Druckregelventil (15) einen Linearitätsfehler FS (Full Scale) von höchstens 5%, vorzugsweise höchstens 3%, besonders vorzugsweise höchsten 2%, aufweist.

4. Ausstoßvorrichtung nach einem der vorhergehenden Ansprüche, wobei die Aktuatorsteuereinheit (10) einen Anschluss (11) zum Anschließen einer übergeordneten Druckversorgungsleitung umfasst.

5. Ausstoßvorrichtung nach einem der vorhergehenden Ansprüche, wobei dem Druckregelventil (15) ein Druckminderer (12) vorgeschalten ist, und/oder wobei dem Druckregelventil (15) ein eine Wartungseinheit (13) zum Entfeuchten der Druckluft vorgeschalten ist, und/oder wobei dem Druckregelventil (15) ein Feinst-Filter (14) vorgeschalten ist.

6. Ausstoßvorrichtung nach einem der vorhergehenden Ansprüche, wobei das Rohr (2) am Innenumfang konisch ist, insbesondre über zumindest 80%, vorzugweise zumindest 90%, besonders vorzugsweise 100%, seiner Länge am Innenumfang konisch ist; und/oder wobei das Rohr (2) einen Flansch (3) zur Befestigung am Pressschneckenseparator (100) aufweist.

7. Pressschneckenseparator (100) zur Abscheidung fester Bestandteile aus einer feste und flüssige Bestandteile enthaltenden Trübe, umfassend:
• ein Gehäuse (101) mit einem Feststoffauslass (108),
• ein in dem Gehäuse (101) angeordnetes Sieb (105),
• eine im Sieb (105) drehbar angeordnete Pressschnecke (104),
• einen die Pressschnecke (104) antreibenden Elektromotor (102),
• eine am Feststoffauslass (108) angeordneten Ausstoßvorrichtung (1) nach einem der vorhergehenden Ansprüche.

8. Pressschneckenseparator nach Anspruch 7, umfassend eine den Elektromotor (102) ansteuernde und/oder am Elektromotor (102) messende Motorelektronik (30), die dazu ausgebildet ist, das Betriebsgröße-Signal (21) des Elektromotors (102) zu erfassen.

9. Pressschneckenseparator nach Anspruch 8, wobei die Motorelektronik (30) einen den Elektromotor (102) ansteuernden Frequenzumrichter umfasst, wobei der Frequenzumrichter das Betriebsgröße-Signal (21) erzeugt.

10. Pressschneckenseparator nach Anspruch 8 oder 9, wobei die Motorelektronik (30) dazu ausgebildet ist, als Betriebsgröße-Signal (21) ein leistungsabhängiges Stromsignal zu erfassen.

11. Pressschneckenseparator nach Anspruch 10, wobei die Motorelektronik (30) dazu ausgebildet ist, das leistungsabhängige Stromsignal zur Ansteuerung des Aktuators (6) in ein Spannungssignal umzuwandeln.

12. Pressschneckenseparator nach einem der Ansprüche 7 bis 11, wobei die Aktuatorsteuereinheit (10) dazu ausgebildet ist, die Gegenkraft (20), insbesondere den Druck des Druckmittelzylinders, bei steigender Leistung des Elektromotors (102) zu verringern; und/oder wobei die Aktuatorsteuereinheit (10) dazu ausgebildet ist, die Gegenkraft (20) bis zu einer Obergrenze von 10kN, vorzugsweise 8kN, besonders vorzugsweise 5kN, zu variieren.

13. Pressschneckenseparator nach einem der Ansprüche 7 bis 12, umfassend zumindest eine Waschdüse (110), angeordnet zum Spritzen von Flüssigkeit auf das Sieb (105); und vorzugsweise umfassend eine Waschdüsensteuereinheit, insbesondere integriert in die Motorelektronik (30), die zur Ansteuerung der Waschdüse (110) basierend auf dem variablen Betriebsgröße-Signal (21) des Elektromotors (102) des Pressschneckenseparators (100) ausgebildet ist.

14. Verfahren zur Abscheidung fester Bestandteile aus einer feste und flüssige Bestandteile enthaltenden Trübe, umfassen die folgenden Schritte
• Betreiben eines Pressschneckenseparators (100), nach einem der Ansprüche 7 bis 13,
o mit einer Pressschnecke (104), die entlang einer Förderrichtung (109) einen Feststoffpfropfen aus der Trübe erzeugt und fördert,
o mit einem Elektromotor (102) zum rotierenden Antrieb der Pressschnecke (104)
o und mit einer Ausstoßvorrichtung (1), die mittels eines Aktuators (6) entgegen der Förderrichtung (109) eine Gegenkraft (20) auf den Feststoffpfropfen erzeugt,
• Abgreifen eines variablen Betriebsgröße-Signal (21) des laufenden Elektromotors (102) und
• Ansteuern des Aktuators (6) basierend auf dem Betriebsgröße-Signal (21).

## Claims

1. An ejection device (1) of a press screw separator (100) for separating solid components from a slurry containing solid and liquid components, comprising
• a pipe (2) for arranging at the solids outlet (108) of the press screw separator (100),
• a closure cone (5) which can be retracted and extended into the pipe (2) for forming an outlet gap (8) between the pipe (2) and the closure cone (5),
• an actuator (6) for applying a counterforce (20) to the closure cone (5),
• and an actuator control unit (10) which is designed to control the actuator (6) based on a variable operating parameter signal (21) of an electric motor (102) of the press screw separator (100),
• wherein the actuator control unit (10) comprises a data input (16) for a data transmission of the operating parameter signal (21), **characterized in that**
• the actuator (6) is designed as a pressure medium cylinder, namely a pneumatic cylinder, and
• the actuator control unit (10) comprises a pressure control valve (15) which can be controlled with the operating parameter signal (21), in particular a proportional pressure control valve.

2. The ejection device according to claim 1, wherein the pressure medium cylinder is arranged coaxially to the direction of movement of the closure cone.

3. The ejection device according to any one of the preceding claims, wherein the pressure control valve (15) has a maximum pressure hysteresis of at most 0.5 bar, preferably at most 0.25 bar; and/or wherein the pressure control valve (15) has a linearity error FS (Full Scale) of at most 5%, preferably at most 3%, particularly preferably at most 2%.

4. The ejection device according to any one of the preceding claims, wherein the actuator control unit (10) comprises a port (11) for connecting a higher-level pressure supply line.

5. The ejection device according to any one of the preceding claims, wherein a pressure reducer (12) is connected upstream of the pressure control valve (15), and/or wherein a maintenance unit (13) for dehumidifying the compressed air is connected upstream of the pressure control valve (15), and/or wherein an ultrafine filter (14) is connected upstream of the pressure control valve (15).

6. The ejection device according to any one of the preceding claims, wherein the tube (2) is conical on the inner circumference, in particular is conical over at least 80%, preferably at least 90%, particularly preferably 100%, of its length on the inner circumference; and/or wherein the tube (2) has a flange (3) for fastening to the press screw separator (100).

7. A press screw separator (100) for separating solid components from a slurry containing solid and liquid components, comprising:
• a housing (101) with a solids outlet (108),
• a screen (105) arranged in the housing (101),
• a press screw (104) rotatably arranged in the screen (105),
• an electric motor (102) driving the press screw (104),
• an ejection device (1) according to any one of the preceding claims arranged at the solids outlet (108).

8. The press screw separator according to claim 7, comprising motor electronics (30) which control the electric motor (102) and/or measure at the electric motor (102) and which are designed to detect the operating parameter signal (21) of the electric motor (102).

9. The press screw separator according to claim 8, wherein the motor electronics (30) comprise a frequency converter controlling the electric motor (102), wherein the frequency converter generates the operating parameter signal (21).

10. The press screw separator according to claim 8 or 9, wherein the motor electronics (30) are designed to detect a power-dependent current signal as the operating parameter signal (21).

11. The press screw separator according to claim 10, wherein the motor electronics (30) are designed to convert the power-dependent current signal into a voltage signal for controlling the actuator (6).

12. The press screw separator according to any one of claims 7 to 11, wherein the actuator control unit (10) is designed to reduce the counterforce (20), in particular the pressure of the pressure medium cylinder, with increasing power of the electric motor (102); and/or wherein the actuator control unit (10) is designed to vary the counterforce (20) up to an upper limit of 10 kN, preferably 8 kN, particularly preferably 5 kN.

13. The press screw separator according to any one of claims 7 to 12, comprising at least one washing nozzle (110) arranged to spray liquid onto the screen (105); and preferably comprising a washing nozzle control unit, in particular integrated into the motor electronics (30), which is designed to control the washing nozzle (110) based on the variable operating parameter signal (21) of the electric motor (102) of the press screw separator (100).

14. A method for separating solid components from a slurry containing solid and liquid components, comprising the following steps
• operating a press screw separator (100) according to any one of claims 7 to 13,
∘ with a press screw (104) which generates and conveys a solids plug from the slurry along a conveying direction (109),
∘ with an electric motor (102) for rotatably driving the press screw (104),
∘ and with an ejection device (1) which generates a counterforce (20) on the solids plug against the conveying direction (109) by means of an actuator (6),
• tapping a variable operating parameter signal (21) of the running electric motor (102), and
• controlling the actuator (6) based on the operating parameter signal (21).

## Revendications

1. Dispositif d'éjection (1) d'un séparateur à vis de pression (100) pour séparer des constituants solides d'un trouble contenant des constituants solides et liquides, comprenant
• un tube (2) destiné à être disposé au niveau de la sortie de matières solides (108) du séparateur à vis de pression (100),
• un cône de fermeture (5) pouvant être rentré et sorti dans le tube (2) pour former une fente de sortie (8) entre le tube (2) et le cône de fermeture (5),
• un actionneur (6) pour solliciter le cône de fermeture (5) avec une force antagoniste (20),
• et une unité de commande d'actionneur (10) qui est réalisée pour commander l'actionneur (6) sur la base d'un signal de grandeur de fonctionnement variable (21) d'un moteur électrique (102) du séparateur à vis de pression (100),
• l'unité de commande d'actionneur (10) comprenant une entrée de données (16) pour une transmission de données du signal de grandeur de fonctionnement (21), **caractérisé en ce que**
• l'actionneur (6) est réalisé sous forme de cylindre de fluide sous pression, à savoir de cylindre pneumatique, et
• l'unité de commande d'actionneur (10) comprend une soupape de régulation de pression (15) pouvant être commandée avec le signal de grandeur de fonctionnement (21), en particulier une soupape de régulation de pression proportionnelle.

2. Dispositif d'éjection selon la revendication 1, le cylindre de fluide sous pression étant disposé coaxialement à la direction de déplacement du cône de fermeture.

3. Dispositif d'éjection selon l'une quelconque des revendications précédentes, la soupape de régulation de pression (15) présentant une hystérésis de pression maximale d'au plus 0,5 bar, de préférence d'au plus 0,25 bar ; et/ou la soupape de régulation de pression (15) présentant une erreur de linéarité FS (Full Scale) d'au plus 5 %, de préférence d'au plus 3 %, de manière particulièrement préférée d'au plus 2 %.

4. Dispositif d'éjection selon l'une quelconque des revendications précédentes, l'unité de commande d'actionneur (10) comprenant un raccord (11) pour le raccordement d'une conduite d'alimentation en pression de niveau supérieur.

5. Dispositif d'éjection selon l'une quelconque des revendications précédentes, un réducteur de pression (12) étant monté en amont de la soupape de régulation de pression (15), et/ou une unité de maintenance (13) pour la déshumidification de l'air comprimé étant montée en amont de la soupape de régulation de pression (15), et/ou un filtre ultrafin (14) étant monté en amont de la soupape de régulation de pression (15).

6. Dispositif d'éjection selon l'une quelconque des revendications précédentes, le tube (2) étant conique au niveau de la périphérie intérieure, notamment étant conique sur au moins 80 %, de préférence au moins 90 %, de manière particulièrement préférée 100 %, de sa longueur au niveau de la périphérie intérieure ; et/ou le tube (2) présentant une bride (3) pour la fixation au séparateur à vis de pression (100).

7. Séparateur à vis de pression (100) pour séparer des constituants solides d'un trouble contenant des constituants solides et liquides, comprenant :
• un boîtier (101) avec une sortie de matières solides (108),
• un tamis (105) disposé dans le boîtier (101),
• une vis de pression (104) disposée de manière rotative dans le tamis (105),
• un moteur électrique (102) entraînant la vis de pression (104),
• un dispositif d'éjection (1) selon l'une quelconque des revendications précédentes disposé au niveau de la sortie de matières solides (108).

8. Séparateur à vis de pression selon la revendication 7, comprenant une électronique de moteur (30) commandant le moteur électrique (102) et/ou mesurant au niveau du moteur électrique (102), qui est réalisée pour détecter le signal de grandeur de fonctionnement (21) du moteur électrique (102).

9. Séparateur à vis de pression selon la revendication 8, l'électronique de moteur (30) comprenant un convertisseur de fréquence commandant le moteur électrique (102), le convertisseur de fréquence générant le signal de grandeur de fonctionnement (21).

10. Séparateur à vis de pression selon la revendication 8 ou 9, l'électronique de moteur (30) étant réalisée pour détecter un signal de courant dépendant de la puissance en tant que signal de grandeur de fonctionnement (21).

11. Séparateur à vis de pression selon la revendication 10, l'électronique de moteur (30) étant réalisée pour convertir le signal de courant dépendant de la puissance en un signal de tension pour commander l'actionneur (6).

12. Séparateur à vis de pression selon l'une quelconque des revendications 7 à 11, l'unité de commande d'actionneur (10) étant réalisée pour réduire la force antagoniste (20), en particulier la pression du cylindre de fluide sous pression, lorsque la puissance du moteur électrique (102) augmente ; et/ou l'unité de commande d'actionneur (10) étant réalisée pour faire varier la force antagoniste (20) jusqu'à une limite supérieure de 10 kN, de préférence de 8 kN, de manière particulièrement préférée de 5 kN.

13. Séparateur à vis de pression selon l'une quelconque des revendications 7 à 12, comprenant au moins une buse de lavage (110), disposée pour pulvériser du liquide sur le tamis (105) ; et de préférence comprenant une unité de commande de buse de lavage, en particulier intégrée dans l'électronique de moteur (30), qui est réalisée pour commander la buse de lavage (110) sur la base du signal de grandeur de fonctionnement variable (21) du moteur électrique (102) du séparateur à vis de pression (100).

14. Procédé pour séparer des constituants solides d'un trouble contenant des constituants solides et liquides, comprenant les étapes suivantes
• fonctionnement d'un séparateur à vis de pression (100) selon l'une quelconque des revendications 7 à 13,
o avec une vis de pression (104), qui génère et transporte un bouchon de matière solide du trouble le long d'une direction de transport (109),
o avec un moteur électrique (102) pour l'entraînement en rotation de la vis de pression (104),
o et avec un dispositif d'éjection (1), qui génère au moyen d'un actionneur (6) à l'encontre de la direction de transport (109) une force antagoniste (20) sur le bouchon de matière solide,
• prélèvement d'un signal de grandeur de fonctionnement variable (21) du moteur électrique (102) en fonctionnement et
• commande de l'actionneur (6) sur la base du signal de grandeur de fonctionnement (21).
